# EUROPÄISCHE PATENTSCHRIFT

(11) **EP 0 624 617 B1**
(45) Veröffentlichungstag und Bekanntmachung des Hinweises auf die Patenterteilung: **07.10.1998**
(21) Anmeldenummer: 94106935.3
(22) Anmeldetag: 04.05.1994
(51) Int. Cl.: C08J 3/03, C08F 2/10

(54) **Verfahren zur Herstellung niedrigviskoser, wasserlöslicher Polymerdispersionen**
Process for preparing low-viscosity water-soluble dispersions
Procédé pour la préparation de dispersions de polymère soluble dans l'eau

(30) Priorität: 14.05.1993 DE 4316200
(43) Veröffentlichungstag der Anmeldung: 17.11.1994
(73) Patentinhaber: Stockhausen GmbH & Co. KG, 47805 Krefeld (DE)
(72) Erfinder: Messner, Bernfried, Dr., Greensboro, North Carolina 27406 (US); Carl, Joachim, Dr., D-64291 Darmstadt (DE); Schmitt, Günter, Dr., D-64291 Darmstadt (DE); Braum, Manfred, D-55124 Mainz (DE); Quis, Peter, Dr., D-64289 Darmstadt (DE)

(56) Entgegenhaltungen:
- EP-A- 0 057 875
- EP-A- 0 376 118
- EP-A- 0 445 619
- EP-A- 0 573 793
- WO-A-87/00848
- US-A- 5 045 587

## Beschreibung

### Gebiet der Erfindung

Die Erfindung betrifft ein zweistufiges Verfahren zur Herstellung niedrigviskoser, wasserlöslicher Polymerdispersionen enthaltend mindestens ein polymeres Dispergiermittel D) und ein Polymerisat A) bestehend aus a1) mindestens einem wasserlöslichen Monomeren, a2) mindestens einem hydrophoben Monomeren und gegebenenfalls a3) mindestens einem amphiphilen Monomeren.

### Stand der Technik

Wäßrige Dispersionen wasserlöslicher Polymerisate werden beispielsweise als Flockungsmittel bei der Abwasserbehandlung, als Entwässerungsmittel nach Abtrennung der wäßrigen Phase, als Retentionsmittel bei der Papierherstellung, als Bodenverbesserungsmittel oder als Dispergiermittel eingesetzt.
EP 170 394 beschreibt eine mit Wasser mischbare Flüssigkeit, bestehend aus Partikeln, aufgebaut aus einem hochmolekularen Polymergel, das Teilchengrößen von über 20 µm aufweist, in wäßriger Lösung. Die kontinuierliche Phase ist hierbei eine wäßrige Lösung, enthaltend ein Äquilibrierungsmittel, das den Wassergehalt der Gelpartikel mit dem Wasseranteil in der kontinuierlichen Phase im Gleichgewicht hält und das somit eine Agglomeration der Gelpartikel verhindert. Als bevorzugte Äquilibrierungsmittel werden das Natriumsalz der Polyacrylsäure bzw. Polydiallyldimethylammoniumchlorid (Poly-DADMAC) verwendet.
In EP 183 466 wird ein Verfahren zur Herstellung einer wasserlöslichen Polymerdispersion beschrieben, gekennzeichnet durch Polymerisieren eines wasserlöslichen Monomeren unter Rühren in einer wäßrigen Lösung von wenigstens einem Salz in Gegenwart eines Dispergiermittels. Hierbei finden Polyole, Polyalkylenether, Alkalisalze der Polyacrylsäure und Alkalisalze der Poly-2-Acrylamido-2-methylpropansulfonsäure als Dispergiermittel bzw. Salze, die in wäßriger Lösung das Polymerisat nicht solvatisieren, Verwendung. DE-PS 29 24 663 umfaßt ein Verfahren zur Herstellung einer wäßrigen Dispersion aus einer wasserlöslichen Polymermasse mit guter Stabilität und Fließfähigkeit, wobei das wasserlösliche Polymerisat wenigstens ein wasserlösliches ethylenisch ungesättigtes Monomeres enthält und wobei als Dispergiermittel Polyalkylenether, Polyethylenimin und andere, gegebenenfalls in Gegenwart von anorganischen Salzen, anwesend sein können. Die so hergestellte wäßrige Dispersion kann, gegebenenfalls nach Verdünnen mit Wasser, als Flockungshilfsmittel, Verdickungsmittel, Bodenkonditionierungsmittel und für weitere Anwendungen eingesetzt werden.
In JP Kokkai 59 108 074 werden Verdickungsmittel beschrieben, bestehend aus Polymerisaten in wäßriger Lösung, die als monomere Bestandteile (Meth)acrylsäure und/oder deren Salze, (Meth)acrylamide sowie Methyl- oder Ethylacrylat enthalten, mit Polyethylenglykol als Dispergiermittel.
DE-OS 42 16 167 beschreibt wäßrige Dispersionen wasserlöslicher Polymerisate gebildet durch Polymerisation eines Gemisches bestehend aus wasserlöslichen, hydrophoben und gegebenenfalls amphiphilen Monomeren in Gegenwart eines polymeren Dispergiermittels.

### Aufgabe und Lösung

Die in EP 170 394 beschriebenen, Gelpartikel enthaltenden, wäßrigen Lösungen haben zum Nachteil, daß sie nach längeren Standzeiten stark erhöhte Viskositäten aufweisen, die nur durch die Anwendung von Schergefällen, wie beispielsweise Rühren, reduziert werden können. Die Flüssigkeitseigenschaften hängen hierbei von einem komplexen Gleichgewicht zwischen Polymerisat, Äquilibrierungsmittel, Wassergehalt und Teilchengröße der Gelpartikel ab.
In EP 183 466 werden wasserlösliche Polymerisate als Dispersionen in wäßrigen Salzlösungen unter Zuhilfenahme eines Dispergiermittels beansprucht. Nachteilig bei diesen Dispersionen ist der hohe Salzgehalt der wäßrigen Phase (bis zu 30 Gew.-%) im Vergleich zu einem relativ geringen Polymerisat(= Wirkstoff-)gehalt (bis zu 20 Gew.-%), der bei bestimmten Anwendungen solcher Dispersionen zu Abwasserproblemen führt.
Nachteilig für die Verwendung von wäßrigen Dispersionen gemäß DE-PS 29 24 663 wirken sich die hohen Anteile an Dispergiermittel bezogen auf das wasserlösliche Polymerisat aus. Verwendet man o.g. Dispersionen beispielsweise als Flockungsmittel für elektrisch geladene Teilchen, so wird der Wirkstoff an hochmolekularen ionischen Polymeren durch das im Vergleich hierzu niedermolekulare Dispergiermittel reduziert.
Die nach JP Kokkai 59 108 075 hergestellten Polymerisate mit Verdickungswirkung besitzen mittlere Molekulargewichte M_{w} zwischen etwa 10⁵ und 5 x 10⁵ Dalton (Gewichtsmittel), die für die Verwendung als Flockungsmittel deutlich zu niedrig sind.

In EP-A 57 857 werden Verdickungsmittel bestehend aus wasserlöslichen hochmolekularen Polymeren, die auch hydrophobe Gruppen enthalten, in einer emulgatorhaltigen, wäßrigen Lösung beschrieben. Sie sind für Anwendungen mit Dauerbelastung,wie z.B. als Mittel für die tertiäre Erdölförderung, gut geeignet, aber nicht als Flockungsmittel. Die Polymergehalte der Mittel liegen nicht höher als 10 Gew.-%.

Die EP-A 376 118 betrifft die Herstellung feinteiliger, gelförmiger Copolymerisate in Tensidlösungen, die nicht wasserlöslich, sondern nur wasserquellbar sind. Sie werden getrocknet und sind ausschließlich als Wasserabsorptionsmittel geeignet.

Die aus dem o.a. Stand der Technik resultierende Aufgabe, wäßrige Dispersionen wasserlöslicher Polymerisate zur Verfügung zu stellen, die eine niedrige Viskosität, einen hohen Gehalt an Polymerisat-Wirkstoff, ein hohes Polymerisat-Molekulargewicht und eine Salz-freie Wasserphase aufweisen, wird von den erfindungsgemäßen Polymerisaten in wäßriger Dispersion nacht DE-OS 42 16 167 gelöst.

Dennoch bestand weiterhin die Aufgabe, im Parameterfeld Viskosität der wäßrigen Dispersion, hoher Gehalt an Polymerisat-Wirkstoff und hohes Polymerisat-Molekulargewicht nach besseren Lösungen zu suchen.
Überraschenderweise wurde gefunden, daß durch das im folgenden beschriebene zweistufige Polymerisationsverfahren die in DE-OS 42 16 167 realisierten niedrigen Viskositäten bzw. hohen Gehalte an Polymerisat-Wirkstoff mit hohem Molekulargewicht noch weiter reduziert (Viskosität) bzw. erhöht (Wirkstoffgehalt und Molekulargewicht) werden können. Diese Aufgabe wird gelöst durch die Merkmale des Anspruchs 1. Gegenstand der Erfindung ist ein Verfahren zur Herstellung niedrigviskoser, wasserlöslicher Polymerdispersionen auf wäßriger Basis enthaltend ein wasserlösliches Polymerisat A) aufgebaut aus den monomeren Bestandteilen
a1) 99 bis 70 Gew.-% mindestens eines wasserlöslichen Monomeren,
a2) 1 bis 30 Gew.-% mindestens eines hydrophoben Monomeren, und gegebenenfalls
a3) 0 bis 20 Gew.-% mindestens eines amphiphilen Monomeren,
wobei sich die Monomerkomponenten a1), a2) und a3) jeweils zu 100 Gew.-% ergänzen und die Polymerisate A) ein mittleres Molekulargewicht M_{w} (Gewichtsmittel) von mindestens 5 x 10⁵ Dalton aufweisen,
dadurch gekennzeichnet,
daß in einer ersten Stufe das Polymerisat A) in wäßriger Dispersion in Gegenwart von 1 bis 50 Gew.-Teilen, bezogen auf 100 Gew.-Teile Wasser als Reaktionsmedium, mindestens eines polymeren Dispergiermittels D), welches mit dem wasserlöslichen Polymerisat A) unverträglich ist, ein mittleres Molekulargewicht M_{w} zwischen 10³ und 5 x 10⁵ Dalton hat und wenigstens eine fünktionelle Gruppe ausgewählt aus Ether-, Hydroxyl-, Carboxyl-, Sulfon-, Sulfatester-, Amho-, Amido-, Imino-, tert. Amino- und/oder quarternäre Ammoniumgruppen besitzt, hergestellt wird und danach in einer zweiten Stufe mindestens ein polymeres Dispergiermittel D) ebenfalls in wäßriger Lösung zugefügt wird, wobei die dynamische Viskosität der Polymerdispersion durch die zweite Zugabe des polymeren Dispergiermittels deutlich abgesenkt wird.

Hierbei wird in der ersten Stufe das Polymerisat A) durch Polymerisation verschiedener Monomerbestandteile a1), a2) und gegebenenfalls a3) in Gegenwart eines polymeren Dispergiermittels hergestellt, wobei
a1) für 99 bis 70 Gew.-% mindestens eines wasserlöslichen Monomeren
a2) für 1 bis 30 Gew.-% mindestens eines hydrophoben Monomeren und
a3) für 0 bis 20 Gew.-%, vorzugsweise 0,1 bis 15 Gew.-%, mindestens eines amphiphilen Monomeren stehen,
und die wasserlöslichen Polymerisate ein mittleres Molekulargewicht (Gewichtsmittel) von mindestens 10⁶ Dalton aufweisen.

In der zweiten Stufe wird eine wäßrige Dispersion mindestens eines polymeren Dispergiermittels D) zugegeben. Als polymere Dispergiermittel D) werden bevorzugt mit dem dispergierten Polymerisat A) unverträgliche Polyelektrolyte mit mittleren Molekulargewichten (Gewichtsmittel) M_{w} < 5 x 10⁵ Dalton oder Polyalkylenether eingesetzt.
In bevorzugten Ausführungen der Erfindung weist mindestens eines der wasserlöslichen Monomeren a1) mindestens eine ionische Gruppe auf, ist das hydrophobe Monomere a2) eine Verbindung der Formel I: 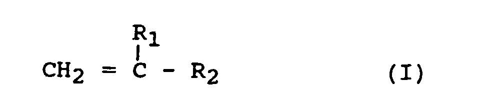 wobei
- R₁: für Wasserstoff oder Methyl
- R₂: für Alkyl mit 1 bis 4 Kohlenstoffatomen, für Cycloalkyl mit 5 bis 12 Kohlenstoffatomen, für Aryl mit 6 bis 12 Kohlenstoffatomen, oder für 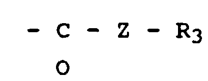 mit R₃ für Alkyl mit 2 bis 8 Kohlenstoffatomen und Z für O, -NH oder -NR₃
stehen kann.
Unter Aryl sei insbesondere ggfls. mit C1 bis C4-Alkylresten substituiertes Phenyl oder Naphthyl verstanden.

Das amphiphile Monomere a3) ist bevorzugt eine Verbindung der Formel II: 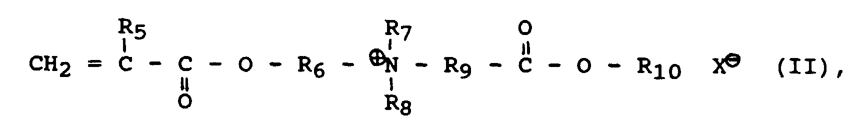 wobei
- R₅: für Wasserstoff oder Methyl
- R₆: für Alkylen mit 1 bis 6 Kohlenstoffatomen,
- R₇ und R₈: unabhängig voneinander für Alkyl mit 1 bis 6 Kohlenstoffatomen,
- R₉: für Alkylen mit 1 bis 6 Kohlenstoffatomen
- R₁₀: für Alkyl mit 8 bis 32 Kohlenstoffatomen
sowie
- X: für Halogen, Pseudohalogen, SO₄CH₃, Acetat
stehen können; hierbei steht Pseudohalogen für -CN-, -OCN- und -SCN-Gruppen,
oder eine Verbindung der Formel III: 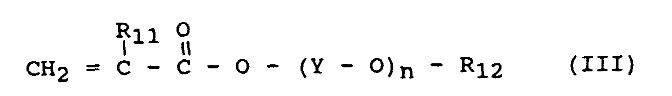 wobei
- R₁₁: für Wasserstoff oder Methyl
- R₁₂: für Alkyl mit 8 bis 32 Kohlenstoffatomen,
- Y: für Alkylen mit 2 bis 6 Kohlenstoffatomen und
- n: für eine ganze Zahl zwischen 1 und 50
stehen können.

### Durchführung der Erfindung

Als Monomere a1) können beispielsweise Salze der Acryl-, und/oder der Methacrylsäure der allgemeinen Formel IV eingesetzt werden: 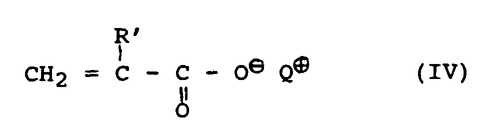 wobei
- R': für Wasserstoff oder Methyl und
- Q^{⊕}: für Alkalimetallionen, wie beispielsweise Na^{⊕} oder K^{⊕}, Ammoniumionen, wie beispielsweise NH₄^{⊕}, ^{⊕}NR"₂H₂, ⊕NR"₃H oder ^{⊕}NR"₄ mit R" = Alkyl mit 1 bis 6 Kohlenstoffatomen oder weitere einwertige, positive gelandene Ionen
stehen können.

Zu Monomeren a1) der Formel IV gehören beispielsweise Natrium(meth)acrylat, Kalium(meth)acrylat oder Ammonium(meth)acrylat.

Desweiteren können beispielsweise die Acryl- und/oder die Methacrylsäure selbst als Monomerkomponente a1), sowie Methacrylamide der Formel V verwendet werden: 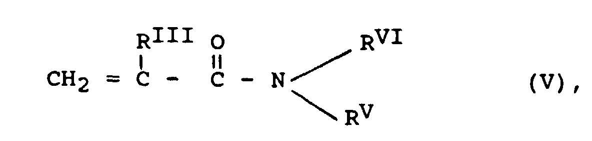 wobei
- R^{III}: für Wasserstoff oder Methyl, sowie
- R^{IV} und R^{V}: unabhängig voneinander für Wasserstoff, für Alkyl mit 1 bis 5 Kohlenstoffatomen
stehen können.

Als Monomere a1) der Formel V seien beispielhaft genannt: (Meth)acrylamid, N-Methyl(meth)acrylamid, N,N-Dimethyl(meth)acrylamid, N,N-Diethyl(meth)acrylamid, N-Methyl-N-ethyl(meth)acrylamid sowie N-Hydroxyethyl(meth)acrylamid. Zur Herstellung der (Meth)acrylamide vergleiche beispielsweise Kirk-Othmer, Encyclopedia of Chemical Technology, Vol. 15, Seiten 346 bis 276, 3rd. Ed., Wiley Interscience, 1981.
Weiterhin können als Monomerkomponente a1) Monomere der Formel VI eingesetzt werden: 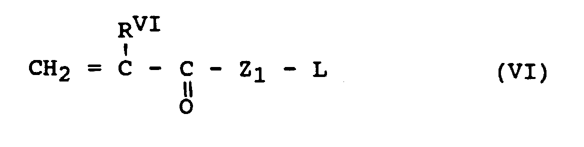 wobei
- R^{VI}: für Wasserstoff oder Methyl
- L: für die Gruppen 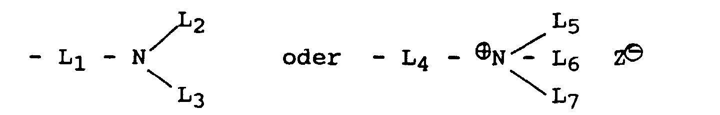
stehen und
- Z₁: für 0, NH oder NR₄
wobei
- L₁ und L₄: für einen Alkylenrest oder Hydroxyalkylenrest mit 2 bis 6 Kohlenstoffatomen, L₂, L₃, L₅, L₆ und L₇ für einen Alkylrest mit 1 bis 6 Kohlenstoffatomen, sowie Z für Halogen, Acetat, SO₄CH₃ stehen können.

Beispielhaft für Monomere a1) der Formel VI seien genannt: 2-(N,N-Dimethylamino)ethyl(meth)acrylat, 3-(N,N-Dimethylamino)propyl(meth)acrylat, 4-(N,N-Dimethylamino)butyl(meth)acrylat, 2-(N,N-Diethylamino)ethyl(meth)acrylat, 2-Hydroxy-3-(N,N-Dimethylamino)propyl(meth)acrylat, 2-(N,N,N-Trimethylammonium)ethyl(meth)acrylat-chlorid, 3-(N,N,N-Trimethylammonium)propyl(meth)acrylat-chlorid oder 2-Hydroxyl-3-(N,N,N-Trimethylammonium)propyl(meth)acrylat-chlorid bzw. die (Meth)acrylamide oder o.g. Verbindungen, wie beispielsweise 2-Dimethylaminoethyl(meth)acrylamid, 3-Dimethylaminopropyl (meth)acrylamid oder 3-Trimethylammoniumpropyl(meth)acrylamid-chlorid. Als Monomerkomponente a1) können weiterhin ethylenisch ungsättigte Monomere, die zur Bildung von wasserlöslichen Polymeren befähigt sind, eingesetzt werden, wie beispielsweise Vinylpryridin, N-Vinylpyrrolidon, Styrolsulfonsäure, N-Vinylimidazol oder Diallyldimethylammoniumchlorid. Dabei sind auch Kombinationen verschiedener, unter al) angeführter wasserlöslicher Monomeren möglich. Zur Darstellung der (Meth)acrylammonium-Salze vgl. beispielsweise Kirk-Othmer, Encyclopedia of Chemical Technology, Vol. 15, Seiten 346 bis 376, 3rd. Ed., Wiley Interscience, 1987.

Hydrophobe Monomere a2) können beispielsweise Monomere der Formel I sein: 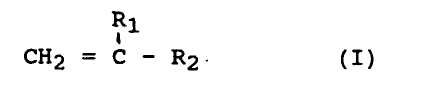 wobei
- R₁: für Wasserstoff oder Alkyl mit 1 bis 5 Kohlenstoffatomen und
- R₂: für Alkyl mit 1 bis 4 Kohlenstoffatomen, für Cycloalkyl mit 5 bis 12 Kohlenstoffatomen, für Aryl mit 6 bis 12 Kohlenstoffatomen, oder für 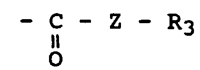 mit R₃ für Alkyl mit 2 bis 8 Kohlenstoffatomen, für Cycloalkyl mit 5 bis 12 Kohlenstoffatomen oder für Aryl mit 6 bis 12 Kohlenstoffatomen und Z für O oder NR₃
stehen können.

Beispielhaft seien hierfür genannt: Styrol, α-Methylstyrol, p-Methylstyrol, p-Vinyltoluol, Vinylcyclopentan, Vinylcyclohexan, Vinylcyclooctan, Isobuten, 2-Methylbuten-1, Hexen-1, 2-Methylhexen-1, 2-Propylhexen-1, Ethyl(meth)acylat, Propyl(meth)acrylat, Isopropyl(meth)acrylat, Butyl(meth)acrylat, Isobutyl(meth)acrylat, Pentyl(meth)acrylat, Hexyl(meth)acrylat, Heptyl(meth)acrylat, Octyl(meth)acrylat, Cyclopentyl(meth)acrylat, Cyclohexyl(meth)acrylat, 3,3,5-Trimethyl-cyclohexyl(meth)acrylat, Cyclooctyl(meth)acrylat, Phenyl(meth)acryl, 4-Methylphenyl(meth)acrylat, 4-Methoxyphenyl(meth)acrylat.
Desweiteren können als hydrophobe Monomere a2) eingesetzt werden: Ethylen, Vinylidenchlorid, Vinylidenfluorid, Vinylchlorid oder weitere überwiegend (ar)aliphatische Verbindungen mit polymerisierbaren Doppelbindungen. Dabei sind auch Kombinationen verschiedener, unter a2) angeführter hydrophober Monomeren möglich.
Amphiphile Monomere a3) können beispielsweise monomere Verbindungen der Formeln II oder III sein: 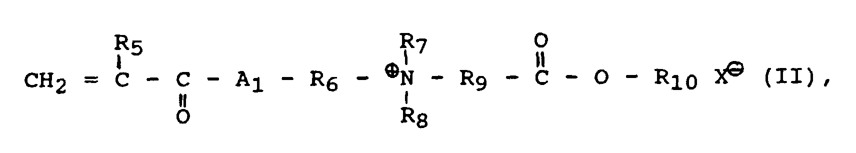 wobei
- A₁: für O , NH, NR₄ mit R₄ für Alkyl mit 1 bis 4 Kohlenstoffatomen,
- R₅: für Wasserstoff oder Methyl,
- R₆: für Alkylen mit 1 bis 6 Kohlenstoffatomen,
- R₇ und R₈: unabhängig voneinander für Alkyl mit 1 bis 6 Kohlenstoffatomen,
- R₉: für Alkylen mit 1 bis 6 Kohlenstoffatomen
- R₁₀: für Alkyl, Aryl und/oder Aralkyl mit 8 bis 32 Kohlenstoffatomen und
- X: für Halogen, Pseudohalogen, SO₄CH₃ oder Acetat
stehen können bzw. 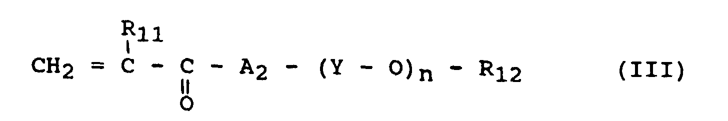 wobei
- A₂: für O, NH, NR₁₃ mit R₁₃ für Alkyl mit 1 bis 4 Kohlenstoffatomen
- R₁₁: für Wasserstoff oder Methyl,
- R₁₂: für Alkyl, Aryl und/oder Aralkyl mit 8 bis 32 Kohlenstoffatomen,
- Y: für Alkylen mit 2 bis 6 Kohlenstoffatomen
sowie
- n: für eine ganze Zahl zwischen 1 und 50
stehen können.

Zur Herstellung der amphiphilen Monomeren der Formel II vergleiche beispielsweise Kirk-Othmer, Encyclopedia of Chemical Technology, Vol. 1, 3rd. Ed., Seiten 330 bis 354 (1978) und Vol. 15, Seiten 346 bis 376 (1981), Wiley Interscience.

Beispielhaft seien hierfür genannt:

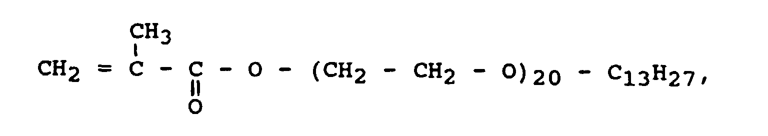

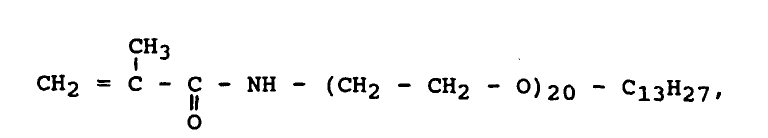

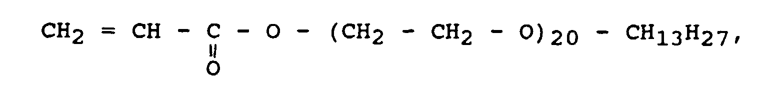

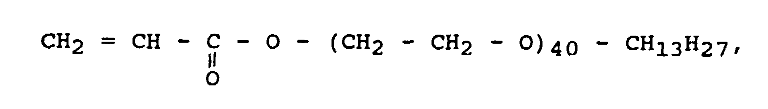

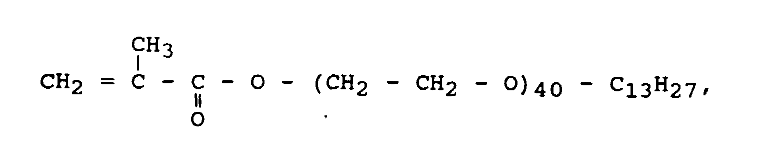

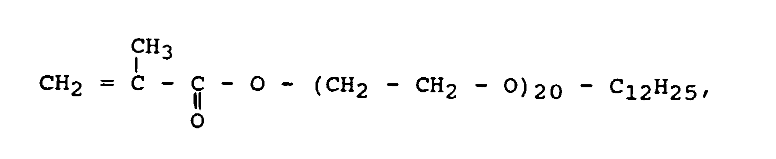

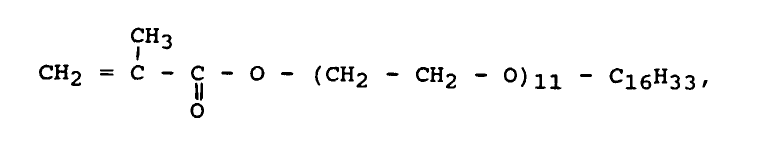

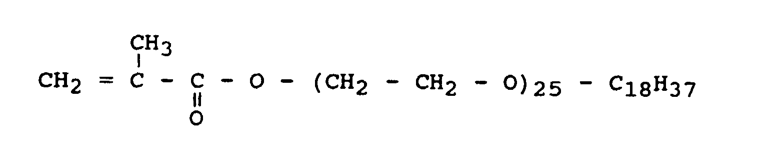

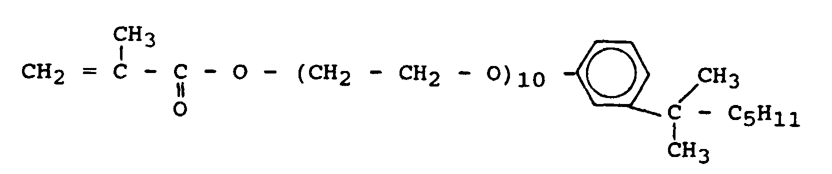

Desweiteren können als amphiphile Monomere a3) beispielsweise eingesetzt werden: 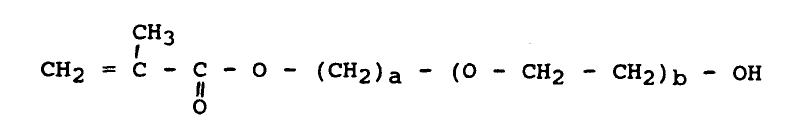 mit a = 6 bis 15 und b = 1 bis 50 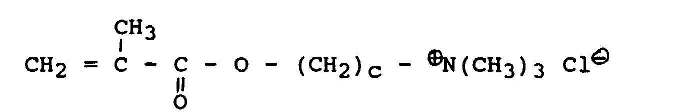 mit c = 6 bis 18 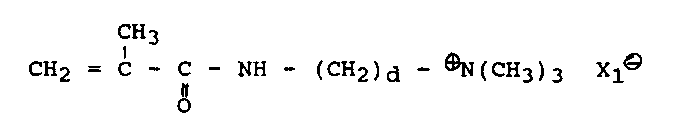 mit
- X₁^{⊖} =: Cl^{⊖} oder SO₄CH₃^{⊖} und
- d =: 6 bis 18 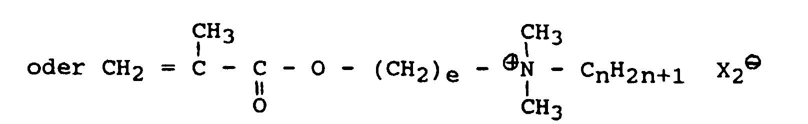
mit
- e =: 2 bis 6 und n = 6 bis 18
- X₂^{⊖} =: Cl^{⊖} oder SO₄CH₃^{⊖}

Dabei sind auch Kombinationen verschiedener, unter a3) angeführter amphiphiler Monomeren möglich.

### Das polymere Dispergiermittel D)

Das polymere Dispergiermittel unterscheidet sich signifikant in der chemischen Zusammensetzung und im mittleren Molekulargewicht M_{w} (Gewichtsmittel) von dem wasserlöslichen Polymerisat, bestehend aus dem Monomerengemisch A), wobei das polymere Dispergiermittel D) mit dem wasserlöslichen Polymerisat unverträglich ist. Die mittleren Molekulargewichte M_{w} der polymeren Dispergiermittel liegen im Bereich zwischen 10³ bis 5 x 10⁵ Dalton, vorzugsweise zwischen 10⁴ bis 4 x 10⁵ Dalton (zur Bestimmung von M_{w} vgl. H.F. Mark et al., Encyclopdia of Polymer Science and Technology, Vol. 10, Seiten 1 bis 19, J. Wiley, 1987).
Die polymeren Dispergiermittel D) enthalten wenigstens eine funktionelle Gruppe ausgewählt aus Ether-, Hydroxyl-, Carboxyl-, Sulfon-, Sulfatester-, Amino-, Amido-,Imino-, tert.-Amino- und/oder quaternären Ammoniumgruppen. Beispielhaft für die Polymerisate D) seien genannt: Cellulosederivate, Polyethylenglykol, Polypropylenglykol, Copolymerisate aus Ethylenglykol und Propylenglykol, Polyvinylacetat, Polyvinylalkohol, Stärke und Stärkederivate, Dextran, Polyvinylpyrrolidon, Polyvinylpyridin, Polyethylenimin, Polyvinylimidazol, Polyvinylsuccinimid, Polyvinyl-2-methylsuccinimid, Polyvinyl-1,3-oxazolidon-2, Polyvinyl-2-methylimidazolin, sowie Copolymerisate, die neben Kombinationen aus monomeren Bausteinen o.g. Polymerisate beispielsweise folgende Monomereinheiten enthalten können: Maleinsäure, Maleinsäureanhydrid, Fumarsäure, Itakonsäure, Itakonsäureanhydrid, (Meth)acrylsäure, Salze der (Meth)acrylsäure oder (Meth)acrylamid-Verbindungen. Bevorzugt werden als polymere Dispergiermittel D Polyalkylenether wie beispielsweise Polyethylenglykol, Polypropylenglykol oder Polybutylen-1,4-ether eingesetzt. Zur Herstellung von Polyalkylenethern vergleiche beispielsweise Kirk-Othmer, Encyclopedia of Chemical Technology, 3rd. Ed., Vol. 18, Seiten 616 bis 670, 1982, Wiley Interscience.

Besonders bevorzugt werden als polymere Dispergiermittel D) Polyelektrolyte verwendet, wie beispielsweise Polymerisate, enthaltend Monomerbausteine wie z.B. Salze der (Meth)acrylsäure als anionische Monomerbausteine oder mit Methylchlorid quaternierte Derivate von N,N-Dimethylaminoethyl(meth)acrylat, N,N-Dimethylaminopropyl(meth)acrylat oder N,N-Dimethylaminohydroxypropyl(meth)acrylat oder N,N-Dimethylaminopropyl(meth)acrylamid. Ganz besonders bevorzugt wird Poly(diallyldimethylammoniumchlorid) (Poly-DADMAC) mit einem mittleren Molekulargewicht M_{w} zwichen 5 x 10⁴ und 4 x 10⁵ Dalton als poylmeres Dispergiermittel eingesetzt. Zur Herstellung von Polyelektrolyten vergleiche beispielsweise Kirk-Othmer, Encyclopedia of Chemical Technology, 3rd. Ed. Vol. 18, Seiten 495 bis 530, 1982, Wiley Interscience.

Desweiteren können niedermolekulare Emulgatoren mit einem Molekulargewicht < 10³ Dalton in Mengen von 0 bis 5 Gew.-% bezogen auf die Polymerdispersion eingesetzt werden.

### Das zweistufige Herstellungsverfahren

### 1. Stufe

### Herstellung und Eigenschaften des wasserlöslichen Polymerisats A) aus dem Monomergemisch a1), a2) und gegebenenfalls a3) in wäßriger Lösung.

Die Menge des Monomerengemisches a1), a2) und ggfs. a3) bezogen auf 100 Gew.-Teile Wasser als Reaktionsmedium liegt zwischen 5 und 80 Gew.-Teilen, vorzugsweise zwischen 10 und 50 Gew.-Teilen. Werden die Monomeren a1) und ggfs. a3) als wäßrige Lösung eingesetzt, so wird der Wasseranteil dem Reaktionsmedium zugeschlagen. Die Menge des polymeren Dispergiermittels D) bezogen auf 100 Gew.-Teile Wasser als Reaktionsmedium liegt zwischen 1 und 50 Gew.-Teilen, bevorzugt zwischen 2 und 40 Gew.-Teilen und besonders bevorzugt zwischen 5 und 30 Gew.-Teilen. Zum Starten der Polymerisation werden beispielsweise radikalische Initiatoren (= Polymerisationsstarter) oder hochenergetische Strahlung, wie beispielsweise UV-Licht, verwendet. Bevorzugt werden als radikalische Initiatoren beispielsweise 2,2'-Azobisisobutyronitril, 2,2'-Azobis(2-amidopropan)dihydrochlorid, bevorzugt in Dimethylformamid gelöst, Kaliumpersulfat, Ammoniumpersulfat, Wasserstoffperoxid, gegebenenfalls in Kombination mit einem Reduktionsmittel wie beispielsweise einem Amin oder Natriumsulfit eingesetzt. Der Anteil an Initiator, bezogen auf das Monomerengemisch a1), a2) und ggfs. a3), liegt gewöhnlich zwischen 10-⁵ und 5 Gew.-%, vorzugsweise zwischen 10-⁴ und 1 Gew.-%, wobei der Initiator zu Beginn der Polymerisation vollständig oder teilweise mit nachfolgender Dosierung über den gesamten Polymerisationsverlauf zugegeben werden kann. Ebenso kann das Monomerengemisch a1), a2) und ggfs. a3) vollständig am Anfang der Polymerisation oder teilweise als Zulauf über den gesamten Polymerisationsverlauf zugegeben werden. Die Polymerisationstemperatur beträgt zwischen 0 und 100 Grad C, bevorzugt zwischen 40 und 55 Grad C. Vorzugsweise wird unter Inertgas-Atmosphäre, beispielsweise unter Stickstoff-Atmosphäre polymerisiert. Der Endumsatz der Polymerisation liegt über 97 Gew.-% des Monomerengemischs a1), a2) und ggfs. a3), wofür im allgemeinen zwischen 1 und 8 Stunden Polymerisationsdauer erforderlich sind.

### 2. Stufe

### Zugabe des polymeren Dispergiermittels D) zu der in der ersten Stufe hergestellten wäßrigen Dispersion des Polymerisats A)

Für den Mischvorgang können sowohl statische als auch dynamische Mischer verwendet werden. Während erstere durch Erzeugung von Turbulenz wirken, die in den Flüssigkeitsgemischen beim Durchströmen der Mischer entsteht, wird die Turbulenz bei den dynamischen Mischern aktiv erzeugt (vgl. hierzu beispielsweise Römpps Chemielexikon, 9. Aufl., Seite 2805, Georg Thieme, Stuttgart, New York, 1991).
Bevorzugt werden Rührer eingesetzt, wie beispielsweise Propeller-, Schrägblatt-, Scheiben-, Impeller-, Kreuzbalken-, Gitter-, Anker-, Schraubenspindel- oder Wendel-Rührer, wobei besonders bevorzugt Rührer verwendet werden, die beim Rührvorgang ein geringes Schergefälle erzeugen (vgl. hierzu z.B. Römpps Chemielexikon, 9. Aufl., Seiten 3939 bis 2940, Georg Thieme, Suttgart, New York, 1992). Beim Mischvorgang wird vorzugsweise die in der ersten Stufe hergestellte wäßrige Dispersion des Polymerisats A) vorgelegt und danach das polymere Dispergiermittel D) unter Rühren schrittweise zugefügt. Dabei wird die Viskosität des Gemischs ständig kontrolliert. In einer besonders bevorzugten Ausführungsform der Erfindung wird die wäßrige Dispersion des Polymerisats auf 30 bis 90 Grad C, vorzugsweise auf 40 bis 70 Grad C erwärmt, um die Viskosität während des Mischvorgangs möglichst niedrig zu halten.
Anschließend wird die Viskosität der Polymerdispersion und einer durch Verdünnen mit Wasser hergestellten 1 %-igen Lösung [bezogen auf das Polymerisat A)] bestimmt.

### Vorteilhafte Wirkungen der Erfindung

Die erfindungsgemäßen wäßrigen Polymerdispersionen zeichnen sich gemessen an der Polymerkonzentration und dem mittleren Molekulargewicht M_{w} des Polymerisats, bestehend aus Monomerbausteinen gemäß Gemisch A), durch eine überraschend niedrige Viskosität aus im Vergleich zu Polymerdispersionen bestehend aus einem Polymerisat ohne hydrophobe Monomerbausteine a2). Durch Einbau von amphiphilen Monomerbausteinen a3) kann die Viskosität der wäßrigen Polymerdispersion weiter verringert werden. Dies verbessert die Handhabbarkeit von wäßrigen Polymerdispersionen mit hohem Polymerisatanteil (und damit hohem Wirkstoffanteil) außerordentlich. Durch den Zusatz des polymeren Dispergiermittels D) in wäßriger Lösung (2. Stufe) wird die Viskosität nochmals deutlich erniedrigt, wodurch noch höhere Anteile an Polymerisat A) in den erfindungsgemäßen Dispersionen und damit noch höhere Wirkstoffgehalte möglich werden. Bei Verdünnen der wäßrigen Polymerdispersion mit Wasser steigt die aktuelle Viskosität auf ein sehr hohes Maximum, wobei das System klar wird. Hierbei wird die verdickende Wirkung des dispergierten Polymerisats deutlich. Dabei sind die Viskositäten der wäßrigen Polymerisatlösungen bei 1 % Polymerisatgehalt auf einem hohen Niveau, wobei das bevorzugt eingesetzte Dispergiermittel D) Poly-DADMAC gleichzeitig als Wirkstoff, d.h. als Störstoffänger für Kreislaufwasser und zur Unterstützung der Flockenbildung beispielsweise bei der Klärschlammkoagulation, fungiert. Ein weiters vorteilhaftes Merkmal der erfindungsgemäßen wäßrigen Polymerdispersionen ist die hohe Scher- und Standstabilität. So bleibt die hohe Viskosität einer wäßrigen Lösung mit 1 % Polymerisatgehalt auch nach längerem Rühren weitgehend konstant.
Die Abwesenheit von organischen Lösungsmitteln gewährleistet eine sichere Handhabung (keine Entflammbarkeit) und eine ökologisch unbedenkliche Verwendung der erfindungsgemäßen Polymerdispersionen als Verdickungsmittel, Flockungshilfsmittel für elektrisch geladene Schwebeteilchen, als Retentionsmittel für die Papierherstellung und/oder als Bodenverbesserungsmittel. In isolierter oder wasserarmer Form kann das erfindungsgemäße Polymerisat als Entwässerungsmittel beispielsweise im Hygienebereich verwendet werden.

Die folgenden Beispiele sollen die Erfindung erläutern. Die physikalischen Daten wurden anhand folgender Normen bestimmt:

Dynamische Viskosität η [mPa·s] nach DIN 53018/53019.
- Molekulargewicht M_{w}:: per Gelpermeationschromatographie (Standard: Poly(2-Trimethyl-ammoniumethylacrylatchlorid)
- Stammbergewert STB II(S):: Bestimmung des zeitlichen Verlaufs des Trübungswerts bei Flockungsmittel-haltigen Lösungen nach dem Flockungsvorgang gemäß firmeninterner Vorschrift

### BEISPIELE

### Beispiel 1

### Vergleichsbeispiel

### Herstellung der wäßrigen Dispersion des Polymerisats A) ohne Zusatz des wäßrigen Dispergiermittels D) in zweiter Stufe

685 g einer 35 %igen wäßrigen Poly-DADMAC-Lösung (M_{w} = 3,18 x 10⁵ Dalton), 180 g Acrylamid, 250 g einer 80 %igen wäßrigen 2-Trimethylammoniumethylacrylatchlorid-Lösung, 20 g Butylacrylat und 865 g Wasser werden in einem Reaktionsgefäß mit N₂ entgast und unter Rühren auf 50 Grad C erwärmt.
Anschließend werden 0,04 g 2,2'-Azobis[2-(2-imidazolin-2-yl)propan] (AIP) hinzugefügt. Nach 3 Stunden unter Rühren wird die Temperatur auf 75 Grad C erhöht und weitere 0,4 g AIP werden hinzugefügt.
Die Polymerisation ist nach einer weiteren Stunde beendet.
Die dynamische Viskosität der wäßrigen Polymerdispersion beträgt n₁ = 60.000 mPa s. Die dynamische Viskosität einer 1 %igen wäßrigen Lösung [bezogen auf das Polymerisat A)] beträgt n₂ = 2 100 mPa s.
Der STB II beträgt 7,4 s (entsprechend der Zeit für das Absinken eines Flockenbetts über eine bestimmte Wegstrecke).
Das mittlere Molekulargewicht M_{w} des Polymerisats beträgt M_{w} > 10⁶ Dalton.

### Beispiel 2

1 000 g der im Vergleichsbeispiel 1 beschriebenen wäßrigen Dispersion des Polymerisats A) werden im Trockenschrank auf 50 Grad C erwärmt. Danach werden mittels eines Propellerrührers (mit 200 Umdrehungen/min) innerhalb von 5 min 111,1 g einer 40 %igen, wäßrigen Poly-DADMAC-Lösung I (M_{w} des Poly-DADMAC: 3,18 x 10⁵ Dalton) zugemischt.

Es resultieren folgende Werte:
- η₁ =: 31 600 mPa·s
- η₂ =: 1 920 mPa·s
- STB II =: 8,2 s

Dieser Lösung werden unter den selben Bedingungen innerhalb von 5 min weitere 222,2 g der 40 %igen, wäßrigen Poly-DADMAC-Lösung I (M_{w} des Poly-DADMAC: 3,18 x 10⁵ Dalton) zugemischt.

Es resultieren folgende Werte:
- η₁ =: 15 300 mPa·s
- η₂ =: 1 320 mPa·s
- STB II =: 7,5 s

### Beispiel 3

1 000 g der im Vergleichsbeispiel 1 beschriebenen wäßrigen Dispersion des Polymerisats A) werden im Trockenschrank auf 50 Grad C erwärmt. Danach werden mittels eines Propellerrührers (mit 200 Umdrehungen/min) innerhalb von 5 min 111,1 g einer 35 %igen, wäßrigen Poly-DADMAC-Lösung II (M_{w} des Poly-DADMAC: 1,05 x 10⁵ Dalton) zugemischt.

Es resultieren folgende Werte:
- η₁ =: 28 700 mPa·s
- η₂ =: 1 850 mPa·s
- STB II =: 7,2 s

Dieser Lösung werden unter den selben Bedingungen innerhalb von 5 min weitere 222,2 g der 25 %igen, wäßrigen Poly-DADMAC-Lösung II (M_{w} des Poly-DADMAC: 1,05 x 10⁵ Dalton) zugemischt.

Es resultieren folgende Werte:
- η₁ =: 7 800 mPa·s
- η₂ =: 1 280 mPa·s
- STB II =: 8,4 s

### Beispiel 4

### Vergleichsbeispiel

Herstellung der wäßrigen Dispersion des Polymerisats A): ohne Zusatz des wäßrigen Dispergiermittels D) in zweiter Stufe 391,4 g einer 35 %igen wäßrigen Poly-DADMAC-Lösung (M_{w} = 3,18 x 10⁵ Dalton), 90 g Acrylamid, 125 g einer 80 %igen wäßrigen 2-Trimethylammoniumethylmethacrylatchlorid-Lösung, 10 g Butylacrylat und 385,6 g Wasser werden in einem Reaktionsgefäß mit N₂ entgast und unter Rühren auf 53 Grad C erwärmt. Anschließend werden 0,02 g AIP in 0,18 g Wasser hinzugefügt. Nach 3 Stunden unter Rühren wird die Temperatur auf 65 Grad C erhöht und weitere 0,2 g AIP in 1,8 g Wasser hinzugefügt.
Die Polymerisation ist nach einer weiteren Stunde beendet.

Es resultieren folgende Werte:
- η₁ =: 261 000 mPa·s
- η₂ =: 2 590 mPa·s
- η₂ =: 2 400 mPa·s (nach 10 min Rühren in abgekühltem Zustand)
- STB II =: 10,2 s
- STB II =: 10,4 s (nach 10 min Rühren in abgekühltem Zustand)

### Beispiel 5

1 000 g der in Vergleichsbeispiel 4 beschriebenen wäßrigen Dispersion des Polymerisats A) werden im Trockenschrank auf 50 Grad C erwärmt. Danach werden mittels eines Propellerrührers (200 upm) innerhalb von 5 min 166,6 g einer 40 %igen, wäßrigen Poly-DADMAC-Lösung I (M_{w} des Poly-DADMAC: 3,18 x 10⁵ Dalton) zugemischt.

Es resultieren folgende Werte:
- η₁ =: 51 900 mPa·s
- η₁ =: 50 800 mPa·s (nach 10 min Rühren im kalten Zustand)
- η₂ =: 1 800 mPa·s
- η₂ =: 1 770 mPa·s (nach 10 min Rühren in kaltem Zustand)
- STB II =: 11,1 s
- STB II =: 11,5 s (nach 10 min Rühren in kaltem Zustand)

### Beispiel 6

### Vergleichsbeispiel: Zugabe der wäßrigen Dispergiermittel-Lösung D) vor der Polymerisation des Polymerisats A)

Zu 1 000 g der Monomerlösung gemäß Beispiel 4 werden 166,6 g einer 40 %igen, wäßrigen Poly-DADMAC-Lösung I (M_{w} des Poly-DADMAC: 3,18 x 10⁵ Dalton) zugemischt und danach gemäß Beispiel 4 polymerisiert.

Es resultieren folgende Werte:
- η₁ =: 227 000 mPa·s
- η₁ =: 220 000 mPa·s (nach 10 min Rühren in kaltem Zustand)
- η₂ =: 1 440 mPa·s
- η₂ =: 1 390 mPa·s (nach 10 min Rühren in kaltem Zustand)
- STB II =: 12,4 s
- STB II =: 14,5 s (nach 10 min Rühren in kaltem Zustand)

## Patentansprüche

1. Verfahren zur Herstellung niedrigviskoser, wasserlöslicher Polymerdispersionen auf wäßriger Basis enthaltend ein wasserlösliches Polymerisat A) aufgebaut aus den monomeren Bestandteilen
a1) 99 bis 70 Gew.-% mindestens eines wasserlöslichen Monomeren,
a2) 1 bis 30 Gew.-% mindestens eines hydrophoben Monomeren, und gegebenenfalls
a3) 0 bis 20 Gew.-% mindestens eines amphiphilen Monomeren,
wobei sich die Monomerkomponenten a1), a2) und a3) jeweils zu 100 Gew.-% ergänzen und die Polymerisate A) ein mittleres Molekulargewicht M_{w} (Gewichtsmittel) von mindestens 5 x 10⁵ Dalton aufweisen,
dadurch gekennzeichnet,
daß in einer ersten Stufe das Polymerisat A) in wäßriger Dispersion in Gegenwart von 1 bis 50 Gew.-Teilen, bezogen auf 100 Gew.-Teile Wasser als Reaktionsmedium, mindestens eines polymeren Dispergiermittels D), welches mit dem wasserlöslichen Polymerisat A) unverträglich ist, ein mittleres Molekulargewicht M_{w} zwischen 10³ und 5 x 10⁵ Dalton hat und wenigstens eine funktionelle Gruppe ausgewählt aus Ether-, Hydroxyl-, Carboxyl-, Sulfon-, Sulfatester-, Amino-, Amido-, Imino-, tert. Amino- und/oder quarternäre Ammoniumgruppen besitzt, hergestellt wird und danach in einer zweiten Stufe mindestens ein polymeres Dispergiermittel D) ebenfalls in wäßriger Lösung zugefügt wird, wobei die dynamische Viskosität der Polymerdispersion durch die zweite Zugabe des polymeren Dispergiermittels deutlich abgesenkt wird.

2. Verfahren gemäß Anspruch 1, dadurch gekennzeichnet, daß mindestens eines der wasserlöslichen Monomeren al) mindestens eine ionische Gruppe aufweist.

3. Verfahren gemäß den Ansprüchen 1 und 2, dadurch gekennzeichnet, daß das hydrophobe Monomere a2) eine Verbindung der Formel I ist: 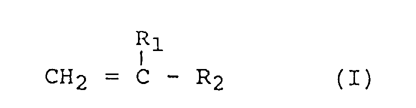 wobei
R₁ = Wasserstoff oder Alkyl mit 1 bis 4 Kohlenstoffatomen und
R₂ = Alkyl mit 1 bis 4 Kohlenstoffatomen, Cycloalkyl mit 5 bis 12 Kohlenstoffatomen, Aryl mit 6 bis 12 Kohlenstoffatomen, oder = 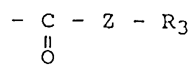 mit R₃ = Alkyl mit 2 bis 8 Kohlenstoffatomen, Cycloalkyl mit 5 bis 12 Kohlenstoffatomen oder Aryl mit 6 bis 12 Kohlenstoffatomen und Z = O, NH oder NR₃
sind.

4. Verfahren gemäß den Ansprüchen 1 bis 3, dadurch gekennzeichnet, daß das amphiphile Monomere a3) eine Verbindung der Formel II ist: 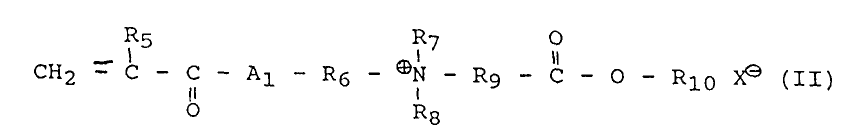 wobei
A₁ = 0, NH, NR₄, worin R₄ für Alkyl mit 1 bis 4 Kohlenstoffatomen
R₅ = Wasserstoff oder Methyl
R₆ = Alkylen mit 1 bis 6 Kohlenstoffatomen,
R₇ und R₈ = unabhängig voneinander Alkyl mit 1 bis 6 Kohlenstoffatomen
R₉ = Alkylen mit 1 bis 6 Kohlenstoffatomen
R₁₀= Alkyl, Aryl und/oder Aralkyl mit 8 bis 32 Kohlenstoffatomen und
X = Halogen, Cyanid, Cyanat, Thiocyanat, Acetat oder S0₄CH₃
sind.

5. Verfahren gemäß den Ansprüchen 1 bis 3, dadurch gekennzeichnet, daß das amphiphile Monomere eine Verbindung der Fonnel III ist: 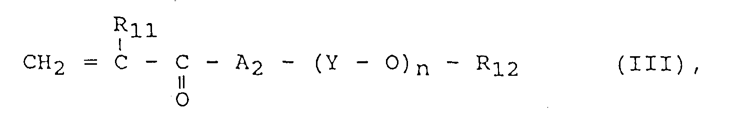 wobei
A₂ = O, NH, NR₁₃ mit R₁₃ = Alkyl mit 1 bis 4 Kohlenstoffatomen
R₁₁ = Wasserstoff oder Methyl
R₁₂= Alkylrest, Arylrest und/oder Aralkylrest mit 8 bis 32 Kohlenstoffatomen
Y = Alkylen mit 2 bis 6 Kohlenstoffatomen und
n = eine ganze Zahl zwischen 1 und 50
sind.

6. Verfahren gemäß den Ansprüchen 1 bis 5, dadurch gekennzeichnet, daß das Dispergiermittel D) ein Polyalkylenether ist, wobei die Alkylengruppe 2 bis 6 Kohlenstoffatome aufweisen.

## Claims

1. A process for the production of low-viscosity, water-soluble polymer dispersions on an aqueous basis, containing a water-soluble polymerizate A) constituted of the following monomeric components:
a1) from 99 to 70 wt.-% of at least one water-soluble monomer,
a2) from 1 to 30 wt.-% of at least one hydrophobic monomer, and optionally
a3) from 0 to 20 wt.-% of at least one amphiphilic monomer,
wherein the monomer components a1), a2) and a3) are balanced such as to make 100 wt.-%, and the polymers A) have an average molecular weight M_{w} (weight average) of at least 5 x 10⁵ daltons, **characterized in that** in a first step, the polymerizate A) is prepared in an aqueous dispersion in the presence of from 1 to 50 wt.-%, based on 100 wt.-% of water as reaction medium, of at least one polymeric dispersant D) which is incompatible with the water-soluble polymer A), has an average molecular weight M_{w} of between 10³ and 5 x 10⁵ daltons and at least one functional group selected from ether, hydroxyl, carboxyl, sulfonic, sulfate ester, amino, amido, imino, tertiary amino and/or quaternary ammonium groups, and subsequently, at least one polymeric dispersant D), likewise in aqueous solution, is added in a second step, the dynamic viscosity of the polymer dispersion being significantly decreased by the second addition of the polymeric dispersant.

2. The process according to claim 1, characterized in that at least one of the water-soluble monomers a1) has at least one ionic group.

3. The process according to claims 1 and 2, characterized in that the hydrophobic monomer a2) is a compound of formula I: 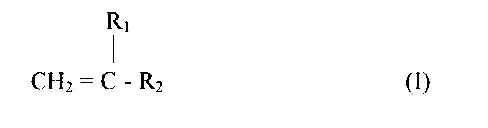 wherein
R₁ = hydrogen or alkyl having from 1 to 4 carbon atoms, and
R₂ = alkyl having from 1 to 4 carbon atoms, cycloalkyl having from 5 to 12 carbon atoms, aryl having from 6 to 12 carbon atoms, or 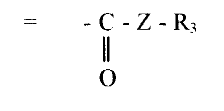 with R₃ = alkyl having from 2 to 8 carbon atoms, cycloalkyl having from 5 to 12 carbon atoms, or aryl having from 6 to 12 carbon atoms, and Z = O, NH or NR₃.

4. The process according to claims 1 through 3, characterized in that the amphiphilic monomer a3) is a compound of formula II: 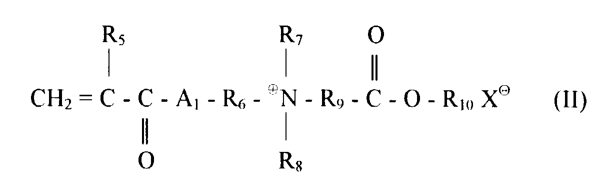 wherein
A₁ = O, NH, NR₄ wherein R₄ represents alkyl having from 1 to 4 carbon atoms,
R₅ = hydrogen or methyl,
R₆ = alkylene having from 1 to 6 carbon atoms,
R₇ and R₈ = are independently alkyl having from 1 to 6 carbon atoms,
R₉ = alkylene having from 1 to 6 carbon atoms,
R₁₀ = alkyl, aryl and/or arylalkyl having from 8 to 32 carbon atoms, and
X = halogen, cyanide, cyanate, thiocyanate, acetate, or SO₄CH₃.

5. The process according to claims 1 through 3, characterized in that the amphiphilic monomer is a compound of formula III: 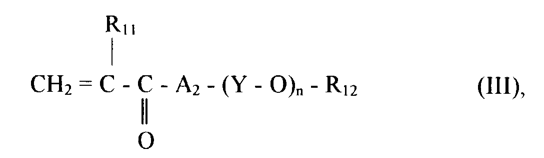 wherein
A₂ = O, NH, NR₁₃ with R₁₃ = alkyl having from 1 to 4 carbon atoms,
R₁₁ = hydrogen or methyl,
R₁₂ = alkyl, aryl and/or arylalkyl having from 8 to 32 carbon atoms,
Y = alkylene having from 2 to 6 carbon atoms, and
n = an integer between 1 and 50.

6. The process according to claims 1 through 5, characterized in that the dispersant D) is a polyalkylene ether wherein the alkylene groups have from 2 to 6 carbon atoms.

## Revendications

1. Procédé de préparation de dispersions polymères solubles dans l'eau et faiblement visqueuses à base aqueuse, contenant un polymérisat A) soluble dans l'eau, constitué des composants monomères suivants:
a1) de 99 à 70% en poids d'au moins un monomère soluble dans l'eau,
a2) de 1 à 30% en poids d'au moins un monomère hydrophobe et, éventuellement,
a3) de 0 à 20% en poids d'au moins un monomère amphiphile,
dans lesquels les composants monomères a1), a2) et a3) forment ensemble 100% en poids et les polymérisats A) présentent un poids moléculaire moyen M_{w} (moyenne pondérale) d'au moins 5 x 10⁵ Dalton, **caractérisé en ce que**, au cours d'une première étape, le polymérisat A) est préparé en dispersion aqueuse en présence de 1 à 50% en poids rapportés à 100 parties d'eau en poids servant de fluide réactionnel, d'au moins un agent dispersant polymère D) qui est incompatible avec le polymérisat soluble dans l'eau A), qui présente un poids moléculaire moyen M_{w} compris entre 10³ et 5 x 10⁵ Dalton et qui possède au moins un groupe fonctionnel choisi parmi les groupes éther, hydroxyle, carboxyle, sulfone, sulfateester, amino, amido, imino, tert-amino et/ou ammonium quaternaire et en ce que, au cours d'une deuxième étape, au moins un agent dispersant polymère D) est ajouté également en solution aqueuse, la viscosité dynamique de la dispersion polymère étant nettement diminuée grâce à l'addition de l'agent dispersant polymère.

2. Procédé selon la revendication 1, caractérisé en ce que au moins l'un des monomères solubles dans l'eau a1) présente au moins un groupe ionique.

3. Procédé selon les revendications 1 et 2, caractérisé en ce que le monomère hydrophobe a2) est un composé de formule I: 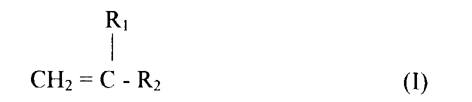 dans laquelle
R₁ = un atome d'hydrogène ou un groupe alkyle avec de 1 à 4 atomes de carbone et
R₂ = un groupe alkyle avec de 1 à 4 atomes de carbone, un groupe cycloalkyle avec de 5 à 12 atomes de carbone, un groupe aryle avec de 6 à 12 atomes de carbone, ou 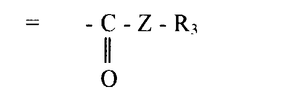
avec
R₃ = un groupe alkyle avec de 3 à 8 atomes de carbone, un groupe cycloalkyle avec de 5 à 12 atomes de carbone ou un groupe aryle avec de 6 à 12 atomes de carbone, et Z = O, NH ou NR₃.

4. Procédé selon les revendications 1 à 3, caractérisé en ce que le monomère amphiphile a3) est un composé de formule II : 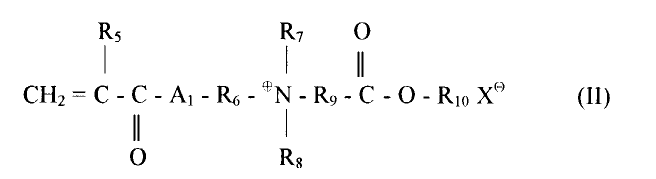 dans laquelle
A₁ = O, NH, NR₄ où R₄ représente un groupe alkyle avec de 1 à 4 atomes de carbone
R₅ = un atome d'hydrogène ou un groupe méthyle
R₆ = un groupe alkylène avec de 1 à 6 atomes de carbone
R₇ et R₈ = représentent, indépendamment l'un de l'autre, un groupe alkyle, avec de 1 à 6 atomes de carbone
R₉ = un groupe alkylène avec de 1 à 6 atomes de carbone
R₁₀ = un groupe alkyle, aryle et/ou aralkyle avec de 8 à 32 atomes de carbone et
X = un atome d'halogène, un groupe cyanure, cyanate, thiocyanate, acétate ou SO₄CH₃.

5. Procédé selon les revendications 1 à 3, caractérisé en ce que le monomère amphiphile est un composé de formule III: 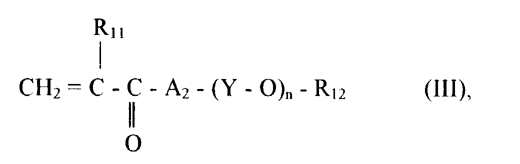 dans laquelle:
A₂ = O, NH, NR₁₃ où R₁₃ représente un groupe alkyle avec de 1 à 4 atomes de carbone,
R₁₁ = un atome d'hydrogène ou un groupe méthyle,
R₁₂ = un radical alkyle, un radical aryle et/ou un radical aralkyle avec de 8 à 32 atomes de carbone,
Y = un groupe alkylène avec de 2 à 6 atomes de carbone, et
n = un nombre entier compris entre 1 et 50.

6. Procédé selon les revendications 1 à 5, caractérisé en ce que l'agent dispersant D) est un polyalkylène-éther dans lequel le groupe alkylène comporte de 2 à 6 atomes de carbone.
